(19) Europäisches Patentamt
European Patent Office
Office européen des brevets

(11) EP 0 495 042 B1

(12) EUROPÄISCHE PATENTSCHRIFT

(45) Veröffentlichungstag und Bekanntmachung des Hinweises auf die Patenterteilung:
17.04.1996 Patentblatt 1996/16

(51) Int Cl.[6]: **G05F 1/59**, H02J 1/10, H02M 3/28

(21) Anmeldenummer: 91913722.4

(22) Anmeldetag: 01.08.1991

(86) Internationale Anmeldenummer:
PCT/EP91/01444

(87) Internationale Veröffentlichungsnummer:
WO 92/03773 (05.03.1992 Gazette 1992/06)

(54) **ANORDNUNG FÜR DIE SYMMETRISCHE LASTVERTEILUNG BEI AUSGANGSSEITIG PARALLELGESCHALTETEN STROMVERSORGUNGSGERÄTEN**

ARRANGEMENT FOR SYMMETRICAL LOAD DISTRIBUTION IN POWER SUPPLY UNITS CONNECTED IN PARALLEL ON THE OUTPUT SIDE

DISPOSITIF DE REPARTITION SYMETRIQUE DE LA CHARGE DANS DES APPAREILS D'ALIMENTATION EN ENERGIE CONNECTES EN PARALLELE DU COTE DE LA SORTIE

(84) Benannte Vertragsstaaten:
AT BE CH DE DK ES FR GB IT LI NL SE

(30) Priorität: 14.08.1990 DE 4025718

(43) Veröffentlichungstag der Anmeldung:
22.07.1992 Patentblatt 1992/30

(73) Patentinhaber: Klöckner-Moeller GmbH
D-53115 Bonn (DE)

(72) Erfinder:
• MELCHERT, Wilhelm
D-5202 Hennef-Rott (DE)
• WRATIL, Peter
D-5060 Berg. Gladbach (DE)

(56) Entgegenhaltungen:
DE-A- 3 219 754          DE-A- 3 320 885
GB-A- 2 009 978

• INTELEC '87 CONFERENCE PROCEEDINGS June 1987,STOCKHOLM pages 294-300;ANDERSON & RIBACK: 'A Modular Redundant SMPS System easy to Expand and Service'see page 299,left-hand column,paragraph 2

## Beschreibung

Anordnung für die symmetrische Lastverteilung bei ausgangsseitig parallelgeschalteten Stromversorgungsgeräten, die mit gleichen Stromanteilen die Versorgung von mindestens einem gemeinsamen Verbraucher übernehmen sollen.

Aus der DE-PS 32 19 754 ist eine Schaltung zur gleichförmigen Strombelastung mehrerer parallel an einer gemeinsamen Last angeschlossenen Stromversorgungs-Einheiten bekannt. Hierbei handelt es sich um eine Stromregelung. Jedem Netzteil innerhalb der parallel geschalteten Geräteanordnung ist hierbei eine Steuerschaltung zugeordnet, die jeweilseine Schaltung zur Abfühlung des die betreffende Stromversorgungseinheit durchsetzenden Stromes und zur Bildung eines Mittelwertes des Stromes enthält, der durch die Stromversorgungs-Einheiten der Anordnung fließt. Gemeinsame Koppelleitungen führen eine mittlere Spannung, die aus dem von jeder Stromversorgungs-Einheit gelieferten Durchschnittstrom abgeleitet wird.

Die Funktion der Steuerschaltung besteht darin, die jeweils zugehörige Stromversorgungseinheit derart einzustellen, daß sie weniger Strom abgibt, wenn festgestellt wird, daß der an dieser Einheit abgefühlte Ausgangsstrom den von allen Einheiten der Anordnung hervorgebrachten Durchschnittsstrom übersteigt.

Aus der DE-PS 27 55 510 ist eine Stromversorgungs einrichtung mit ausgangsseitig parallelgeschalteten spannungsgeregelten Stromversorgungsgeräten bekannt geworden. Die Schaltungsanordnung beinhaltet einen leistungsabgebenden Hauptkreis und einen Hilfskreis, der gleich dimensioniert sein muß wie der Hauptkreis. Die besondere Ausbildung dieser Schaltung besteht darin, daß von den Istwertteilern des Haupt- und Hilfskreises je ein der Ausgangsspannung des Hauptkreises bzw. der Leerlaufspannung des Hilfskreises proportionaler Spannungswert als Istwert für eine Mischung abgegriffen wird. Aus dem Vergleich des Ist-Mittelwertes
mit einem Sollwert wird die Regelabweichung gewonnen, die das
Tastverhältnis der Steuerwechselspannung an dem Schalttransistor bestimmt.

Die bekannten Problemlösungen benutzen, wie der angegebene Stand der Technik aufzeigt, sehr aufwendige Schaltungen. Spannungsquellen werden jede für sich genauestens abgeglichen, damit sie im Verbund symmetrisch belastet werden. An die Regelkreise werden ebenfalls hohe Anforderungen gestellt, da die Spannungsausregelung nahezu unabhängig von der Last sein muß. Diese Maßnahmen führen zu unwirtschaftlich hohen Kosten, die beispielsweise im heutigen SPS-Markt nicht vertretbar sind.

Demgemäß liegt der Erfindung die Aufgabe zugrunde, mit einfachen und wirtschaftlichen Maßnahmen eine Anordnung für die symmetrische Stromverteilung zwischen mindestens zwei parallelgeschalteten Stromversorgungseinheiten zu schaffen, die für mindestens einen gemeinsamen Verbraucher den Strombedarf zur Verfügung stellen.

Diese Aufgabe wird erfindungsgemäß durch das kennzeichnende Merkmal des Hauptanspruchs 1 gelöst, indem jede Stromversorgungseinheit eine Referenzspannungquelle aufweist, deren Ausgangsleitungen auf einen gemeinsamen Referenzbus geführt sind, wobei der Referenzbus durch die Beschaltung der Referenzspan nungsquellen mit je einem Entkopplungselement immer eine gleiche Referenzspannung aufweist, auf die jede Regeleinrichtung zugreift.

Dabei ist es erfindungsgemäß von besonderem Vorteil, daß die Schaltungselemente der Referenzspannungsquellen der Stromversorgungseinheiten nicht aufeinander abgeglichen sind.

Die Erfindung wird anhand der in der Zeichnung dargestellten Ausführungsbeispiele näher eläutert. Es zeigen

**Fig.1** parallelgeschaltete Stromversorgungseinrichtungen mit dem durch die Erfindung realisierten, gemeinsamen Referenzbus,
**Fig.2** die Schaltung zur Realisierung eines gemeinsamen Referenzbusses nach der Erfindung mit der Einrichtung zur Ausregelung des Längstransistors,
**Fig.3** als Ersatzschaltbild die Parallelschaltung zweier Referenzspannungsquellen und die Anbindung an den gemeinsamen Referenzbus,
**Fig.4** ein Ersatzschaltbild zweier parallelgeschalteter Referenzspannungsquellen für ein Berechnungsbeispiel,
**Fig.5** ein Ersatzschaltbild zur Herleitung des Überlagerungssatzes 1 in dem Berechnungsbeispiel,
**Fig.6** ein Ersatzschaltbild zur Herleitung des Überlagerungssatzes 2 in dem Berechnungsbeispiel,
**Fig.7** zeigt das sich aus dem Berechnungsbeispiel ergebene Bild.

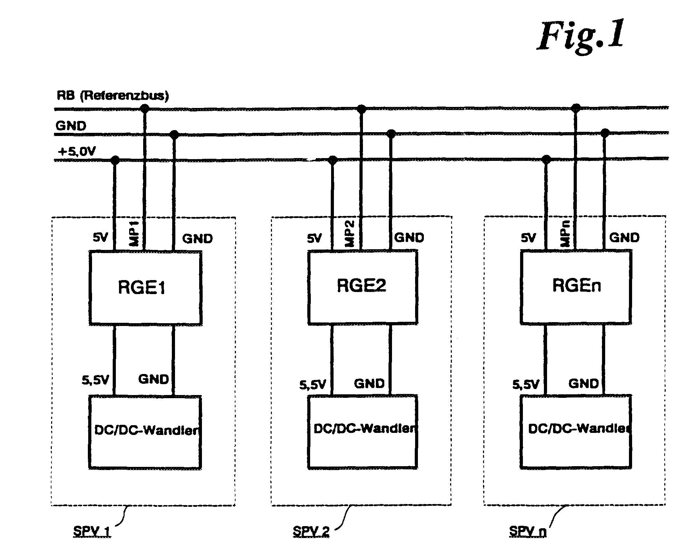

Fig.1 zeigt parallelgeschaltete Stromversorgungseinrichtungen mit dem durch die Erfindung realisierten, gemeinsamen Referenzbus. Die Stromversorgungseinheiten SPV 1, SPV 2 bis SPV n bestehen primärseitig aus den DC/DC-Wandlern, die eine instabile Gleichspannung 5,5V der jeweiligen Regeleinrichtung RGE1, RGE2 bis RGEn zur Verfügung stellen. Die geregelte Spannung von 5,0V der Stromversorgungseinheiten SPV1, SPV2 bis SPVn sind sekundärseitig mit ihren parallel geschaltet. Die Referenzanschlüsse MP1, MP2 bis MPn sind auf einen gemeinsamen Referenzbus RB ge schaltet. Damit wird erreicht, daß die Ausgangsspannungen aller in der Anordnung befindlichen Stromversorgungseinheiten nur eine Referenzspannung sehen und ihren Längsregler mittels einer Regeleinrichtung RGE1, RGE2 und RGEn derart aussteuern, daß die Ausgangsspannungen jeder Stromversorgungseinrichtung SPV 1, SPV 2 und SPV n nahezu die selben Werte aufweisen.

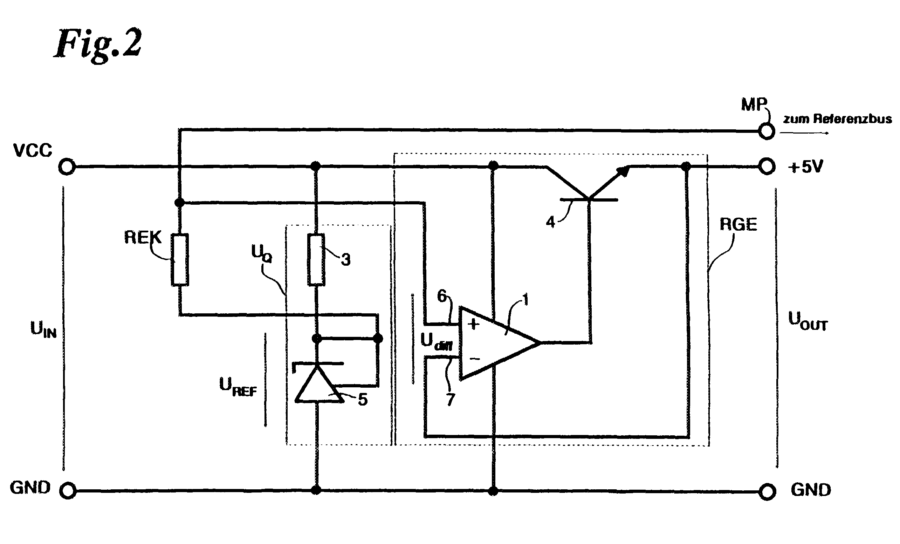

Fig.2 zeigt die Schaltung zur Realisierung des gemeinsamen Referenzbusses nach der Erfindung mit der Einrichtung zur Ausregelung des Längstransistors, die jede parallelgeschaltete Stromversorgungseinrichtung aufweist. Aus der Eingangsspannung $U_{IN}$ wird mittels der Zenerdiode 5 und dem Widerstand 3 eine Referenzspannung $U_{REF}$ gebildet. Ein Regelverstärker 1 tastet mit dem nichtinvertierenden Eingang 6 die Referenzspannung $U_{REF}$ und mit seinem invertierenden Eingang 7 die Ausgangsspannung $U_{OUT}$ ab. Entsprechend der Schwankungen der Ausgangsspannung $U_{OUT}$ wird der Längstransistor 4 von dem Regelverstärker 1 ausgesteuert. Die Spannung $U_{diff}$ wird durch dUnsymmetrie der Eingangsstufen des Regelverstärkers 1 bestimmt und ist vernachlässigbar gering ($U_{diff}$ typ bei OPV's $< 10^{-4}$ V). Die Referenzspannung $U_{REF}$ liegt über den Entkopplungswiderstand 2 und den Anschlußpunkt MP auf dem Referenzbus.

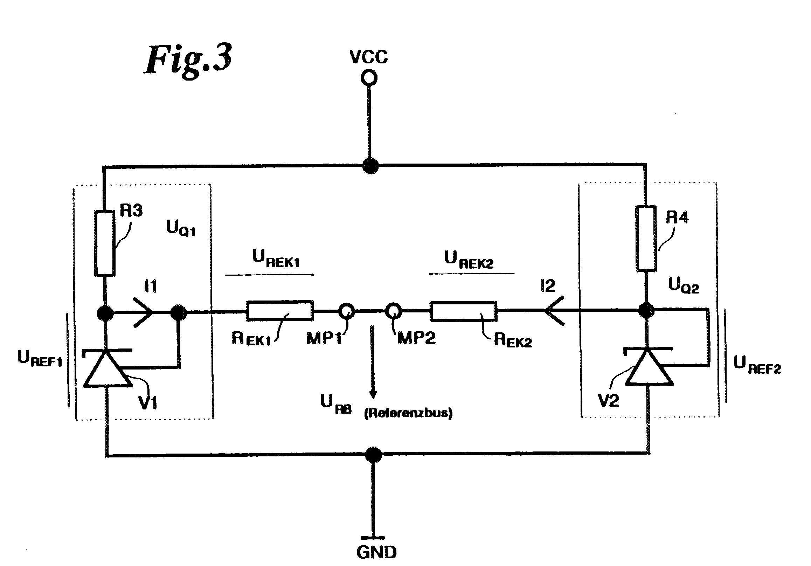

Fig.3 zeigt als Ersatzschaltbild die Parallelschaltung zweier Referenzspannungsquellen und die Anbindung an den gemeinsamen Referenzbus.

Für die Grundlage der Spannungsgleichheit bei Symmetrierung von n - Spannungsquellen über Widerstände gilt der Überlagerungssatz. Hierauf stützt sich die Erfindung und macht es möglich, mehrere Stromversorgungseinheiten parallelzuschalten und dabei eine symmetrische Lastverteilung zu erreichen.

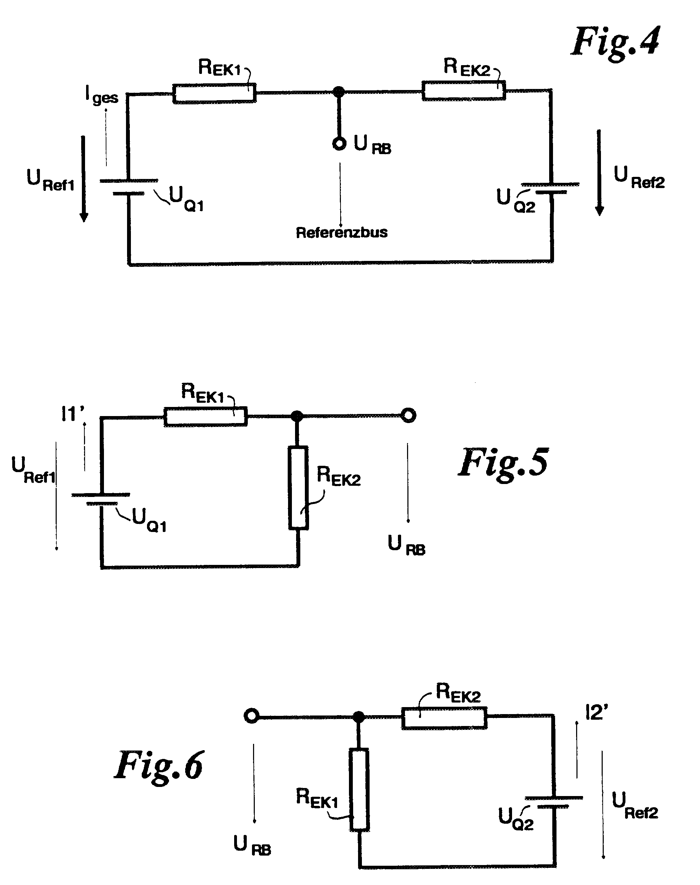

Anhand der Fig.4 bis Fig.7 wird im folgenden ein Berechnungsbeispiel angegeben. In diesem Beispiel sind zwei Referenzspannungsquellen $U_{Q1}$ und $U_{Q2}$ über die Entkopplungswiderstände R1 und R2 parallel geschaltet.

Fig.5 zeigt ein Ersatzschaltbild, bei dem angenommen wird, daß $U_{Q2}$ kurzgeschlossen ist. Bei der angenommenen Stromrichtung I1' und einem Spannungswert von +3V für $U_{Q1}$ und 1,2 KOhm für R1 ergibt sich

$$I1' = \frac{3V}{1,2K+1,2K} = 1,25 \text{ mA}$$

Fig.6 zeigt ein Ersatzschaltbild, bei dem angenommen wird, daß $U_{Q1}$ kurzgeschlossen ist. Bei der angenommenen Stromrichtung I2' und einem Spannungswert von +5V für $U_{Q2}$ und 1,2 KOhm für R2 ergibt sich

$$I2' = \frac{5V}{1,2K+1,2K} = 2,0833 \text{ mA}$$

Daraus ergibt sich

$$I_{ges} = 1,25 \text{ mA} - 2,0833 \text{ mA} = -833,3 \text{ uA}$$

Das Berechnungsbeispiel zeigt, daß der Strom entgegengesetzt der angenommenen Stromrichtungen fließt. Der Spannungsabfall $U_{REK1}$ und $U_{REK2}$ an den Entkopp lungswiderständen $R_{EK1}$ und $R_{EK2}$ ist somit

$$U_{REK1} = 1,2 \text{ KOhm} \times 833,3 \text{ uA } 1,0V$$

$$U_{REK2} = 1,2 \text{ KOhm} \times 833,3 \text{ uA } 1,0V$$

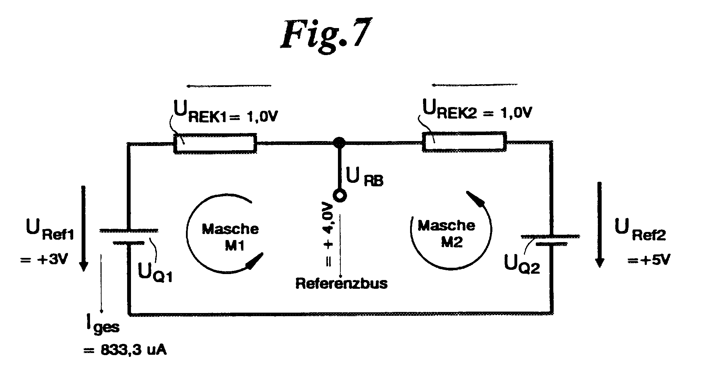

Fig.7 zeigt das sich aus dem Berechnungsbeispiel ergebene Bild.
Für Masche M1 gilt

$$U_{Ref1} - U_{RB} + U_{REK1} = 0 ====> U_{RB} = U_{Ref1} + U_{REK1} = 3V + 1V = 4,0V$$

Für Masche M2 gilt

$$U_{RB} - U_{Ref2} + U_{REK2} = 0 ====> U_{RB} = U_{Ref2} - U_{REK2} = 5V - 1V = 4,0V$$

Das Ergebnis zeigt auf, daß durch Symmetrierung über Widerstände die resultierende Spannung $U_{RB}$ immer der Mittelwert der einzelnen Spannungen $U_{Ref1}$ und $U_{Ref2}$ ist.

Die Ausgangsspannung der Stromversorgungseinrichtungen SPV1 bis SPVn setzt sich somit immer zusammen aus

$$U_{OUT} = +U_{diff} + U_{RB}.$$

Da $U_{diff}$ wie angegeben bei $+ 10^{-4}$ liegt ist dieser Wert absolut vernachlässigbar.

**Patentansprüche**

1. Anordnung für die symmetrische Lastverteilung bei ausgangsseitig parallelgeschalteten Stromversorgungsgeräten, die mit gleichen Stromanteilen die Versorgung von mindestens einem gemeinsamen Verbraucher übernehmen sollen, **dadurch gekennzeichnet,** daß jede Stromversorgungseinheit (SPV1 - SPVn) eine Referenzspannungquelle ($U_{Q1}$ - $U_{Qn}$) aufweist, deren Ausgangsleitungen (MP1 -MPn) auf einen gemeinsamen Referenzbus (RB) geführt sind, wobei der Referenzbus (RB) durch die Beschaltung der Referenzspannungsquellen ($U_{Q1}$ - $U_{Qn}$) mit je einem Entkopplungselement ($R_{EK1}$ bis $R_{EKn}$) immer eine gleiche Referenzspannung ($U_{RB}$) aufweist, auf die jede Regeleinrichtung (RGE1 - RGEn) zugreift.

**2.** Anordnung für die symmetrische Lastverteilung bei ausgangsseitig parallelgeschalteten Stromversorgungsgeräten nach Anspruch 1, **dadurch gekennzeichnet,** daß die Schaltungselemente (R3, R4, V1, V2, $R_{EK1}$, $R_{EK2}$) der Referenzspannungsquellen (UQ1 bis UQn) der Stromversorgungseinheiten (SPV1 bis SPVn) toleranzmäßig nicht aufeinander abgeglichen sind.

**Claims**

**1.** Process allowing symmetric load distribution in power supply units which are connected in parallel at the output side and which shall supply equal current components to at least one common consumer, **in which** every power supply unit (SPV1 - SPVn) has a reference voltage source ($U_{Q1}$ - $U_{Qn}$), the output lines (MP1 - MPn) of which lead to a common reference bus (RB), while the fact that the reference voltage sources ($U_{Q1}$ - $U_{Qn}$) are wired-up with one decoupling element each ($R_{EK1}$ through $R_{EKn}$) enables the reference bus (RB) to present always the same reference voltage ($U_{RB}$) which is referred to by every control device (RGE1 - RGEn).

**2.** Process allowing symmetric load distribution in power supply units which are connected in parallel at the output side as claimed in claim 1, **wherein** the circuit elements (R3, R4, V1, V2, $R_{EK1}$, $R_{EK2}$) of the reference voltage sources (UQ1 through UQn) of the power supply units (SPV1 through SPVn) are not balanced with regard to one another in terms of tolerance.

**Revendications**

**1.** Procédé pour la répartition symétrique de charge dans des appareils d'alimentation électrique connectés en parallèle du côté sortie, devant assurer, sous les mêmes répartitions de courant, l'alimentation d'un récepteur commun au moins, **caractérisé en ce que** chaque unité d'alimentation en courant (SPV1 - SPVn) présente une source de tension de référence (UQ1 - UQn), dont les lignes de sortie (MP1 - MPn) sont dirigées sur un bus commun de référence (RB), en quoi le bus de référence (RB) présente toujours la même tension de référence (URB) par le branchement de chacune des sources de tension de référence (UQ1 - UQn) avec un élément de découplage respectif (REK1 à REKn), tension de référence à laquelle accède chaque équipement de réglage (RGE1 - RGEn).

**2.** Procédé pour la répartition symétrique de charge dans des appareils d'alimentation électrique connectés en parallèle du côté sortie selon la revendication 1, **caractérisé en ce que** les éléments de circuit (R3, R4, V1, V2, REK1, REK2) des sources de tension de référence (UQ1 à UQn) des unités d'alimentation en courant (SPV1 à SPVn) ne sont pas réglés l'un sur l'autre en ce qui concerne les tolérances.

*Fig.1*

Fig.2

Fig.3

Fig.4

Fig.5

Fig.6

# *Fig.7*

$U_{REK1} = 1,0V$

$U_{REK2} = 1,0V$

$U_{RB}$

$U_{Ref1}$
$= +3V$

$U_{Q1}$

Masche
M1

$= +4,0V$

Referenzbus

Masche
M2

$U_{Q2}$

$U_{Ref2}$
$= +5V$

$I_{ges}$
$= 833,3\ uA$